# EUROPEAN PATENT APPLICATION

(11) **EP 0 853 355 A2**
(43) Date of publication of application: **15.07.1998**
(21) Application number: 98300189.2
(22) Date of filing: 13.01.1998
(51) Int. Cl.: H01R 35/02, B60R 16/02

(54) **Electrical connector**

(30) Priority: 14.01.1997 GB 9700621; 13.09.1997 GB 9719500
(71) Applicant: LUCAS INDUSTRIES PUBLIC LIMITED COMPANY, Solihull B90 4LA (GB)
(72) Inventor: McKnight, Ian Alexander, Accrington, Lancashire, BB5 2AH (GB); Florentine, Andrew Vincent, Burnley, Lancashire, BB12 0LD (GB); Richardson, David Conway, Higher Kinnerton, Flintshire, CH4 9DA (GB)
(74) Representative: Bailey, Richard Alan

(57) **Abstract**

An electrical connector comprises first and second relatively rotatable housing parts (12, 14) housing a conductor. A first end of the conductor is carried by the first housing part (12) and a second end of the conductor is carried by the second housing part (14). The first housing part (12) carries an indicator wheel (16) which is cooperable with a tooth (30) of the second housing part (14) to provide an indication of the relative rotary positions of the housing parts (12, 14). The indicator wheel (16) is rotatable about an axis perpendicular to that about which the first and second housing parts (12, 14) rotate. The indicator wheel (16) may also act to limit rotary motion of the housing parts (12, 14).

## Description

This invention relates to an electrical connector, and in particular to a rotary electrical connector, for example for use in providing electrical connections to steering wheel mounted devices or switches of a vehicle.

Where a reliable electrical connection is required for a steering wheel mounted device, for example an inflatable air-bag, one type of electrical connector which is used is a ribbon cassette connector. Such a connector comprises first and second housing parts which are rotatable relative to one another and which house a loosely wound coil of an electrically conductive material. The ends of the electrically conductive material are connected to suitable terminals carried by the housing parts.

In use, the connector is located with the coil encircling the rotatable shaft upon which the vehicle's steering wheel is mounted, one of the parts of the housing being rotatable with the shaft whilst the other housing part is fixed on an adjacent part of the vehicle body. It will be appreciated that rotation of the shaft results in relative movement of the housing parts and in tightening or loosening of the coil windings.

Generally, the connectors are arranged to permit a relatively low number of revolutions of the shaft before the windings become tightly wound either abutting the inner wall or the outer wall of the housing. Attempts to continue rotation of the shaft result in the connector being damaged. In use, when the connector is correctly fitted to a vehicle, the limited number of rotations does not matter as rotation of the steering wheel from one extreme lock position to the opposite lock position requires fewer rotations of the shaft than the maximum permitted by the connector. However, if the connector is incorrectly fitted, the coil may become tightly wound before the extreme lock position is reached, thus damage to the connector may occur.

A connector is described in WO95/02263 in which the risk of damage is avoided by providing an indicator which provides an indication of the position of the connector. The indicator can be used to ensure that the connector is mounted correctly upon the vehicle. The connector further includes lock means whereby continued relative rotation of the housing parts is restricted before the coil becomes sufficiently tightly wound to cause damage to the connector. The connector includes an indicator wheel which is rotatable about an axis which is parallel to the axis of relative rotation of the housing parts. The indicator wheel includes a plurality of teeth which cooperate with a tooth provided on one of the housing parts so that for each full rotation of the first housing part with respect to the second housing part, the wheel is moved through a predetermined angle. A lock arrangement is provided whereby rotation of the wheel other than as a result of relative rotation of the housing parts is prevented. The wheel is shaped so that after a predetermined amount of movement of the wheel in a particular direction has taken place, further movement of the wheel in that direction is prevented. The prevention of further movement of the wheel prevents further relative rotation of the housing parts.

According to the present invention there is provided an electrical connector comprising first and second relatively rotatable housing parts defining a housing, a loosely wound, coiled conductor located within the housing, the conductor having a first end carried by the first housing part and a second end carried by the second housing part, and indicator means arranged to indicate the relative positions of the first and second housing parts with respect to a predetermined position, the indicator means comprising an indicator wheel carried by the first housing part and rotatable about an axis extending perpendicularly to the axis of relative rotation of the first and second housing parts, the indicator wheel being cooperable with a tooth carried by the second housing part to adjust the angular position of the indicator wheel in response to relative rotation of the housing parts.

The indicator wheel is conveniently located within the housing, one of the first and second housing parts including an opening through which the indicator wheel is visible.

It will be appreciated that by locating the indicator wheel within the housing, the electrical connector is relatively compact. Further, as the indicator wheel is located within the housing, the indicator wheel is less susceptible to accidental damage.

Movement of the indicator wheel beyond a predetermined angle relative to the first housing part may be prevented by engagement of a projection provided on the indicator wheel with part of the second housing part.

Alternatively, the indicator wheel may be provided with abutment means engageable with the first housing part upon rotation of the indicator wheel to prevent angular movement of the indicator wheel beyond a predetermined angle relative to the first housing part.

The abutment means conveniently comprises a projection which is engageable with ribs provided on the first housing part to limit angular movement of the indicator wheel.

The indicator wheel is conveniently constructed using a technique permitting the wheel to be constructed from a combination of materials, for example, a twin shot moulding technique. Such a technique permits various parts of the wheel to be moulded from different materials having different properties, for example wear resistance.

According to another aspect of the invention there is provided a connector comprising first and second relatively rotatable housing parts and an indicator wheel carried by one of the housing parts and arranged to be driven upon relative movement of the first and second housing parts to provide an indication of the relative positions of the first and second housing parts away from a datum position, wherein the indicator wheel is constructed using a twin shot moulding technique or other technique permitting the wheel to be constructed from a combination of materials.

The invention will further be described, by way of example, with reference to the accompanying drawings, in which:-
Figure 1 is a perspective view of a connector in accordance with an embodiment of the invention, with half of the connector broken away;
Figure 2 is a perspective view of an indicator wheel forming part of the connector of Figure 1;
Figure 3 is a cross-sectional view of part of the connector;
Figure 4 is a diagrammatic plan view of part of the connector;
Figures 5 to 7 are diagrammatic views illustrating movement of the indicator wheel during operation of the connector;
Figure 8 is a perspective view, partly in section, of a connector in accordance with another embodiment of the invention;
Figure 9 is a perspective view of an indicator wheel used in the connector of Figure 8; and
Figure 10 is a perspective view of the first, upper housing part of the connector of Figure 8.

The rotary electrical connector illustrated in the accompanying drawings comprises a two part plastics housing 10 including an upper part 12 and a lower part 14. The upper part 12 includes an annular region 12a, and a downwardly extending wall 12b which depends from the inner periphery of the annular region 12a. The lower part 14 comprises an outer cylindrical wall 14a the lower end of which is connected to the outer periphery of an annular region 14b. The upper and lower housing parts 12, 14 together define an annular chamber which houses a loosely wound electrical conductor (not shown). The conductor may alternatively be of the known type in which the conductor is folded back upon itself, the conductor being wound around a C-shaped insert located within the annular chamber, such an arrangement being advantageous in that a shorter length of conductor material is required than in the loosely wound coil type. One end of the electrical conductor is connected to a terminal carried by the upper housing part 12 whilst the other end of the conductor is connected to a terminal carried by the lower housing part 14. The upper and lower housing parts 12, 14 are rotatable with respect to one another, and it will be appreciated that relative rotation of the upper and lower housing parts 12, 14 results in the coils of the electrical conductor either tightening or loosening depending upon the direction of relative rotation.

The rotary electrical connector is intended for use in a vehicle in order to provide an electrical connection between a steering wheel mounted switch or device and the electrical circuits of the vehicle. The lower housing part 14 includes projections 14c which are provided with openings through which bolts may extend, in use, in order to secure the lower housing part 14 to the body of the vehicle. The upper housing part 12 is intended to rotate with the shaft to which the vehicle steering wheel is mounted, in use, the upper housing part 12 including a connector block (not shown) which protrudes from the top surface of the upper housing part into apertures provided in the steering wheel whereby rotational movement of the steering wheel and hence shaft is transmitted to the upper housing part 12.

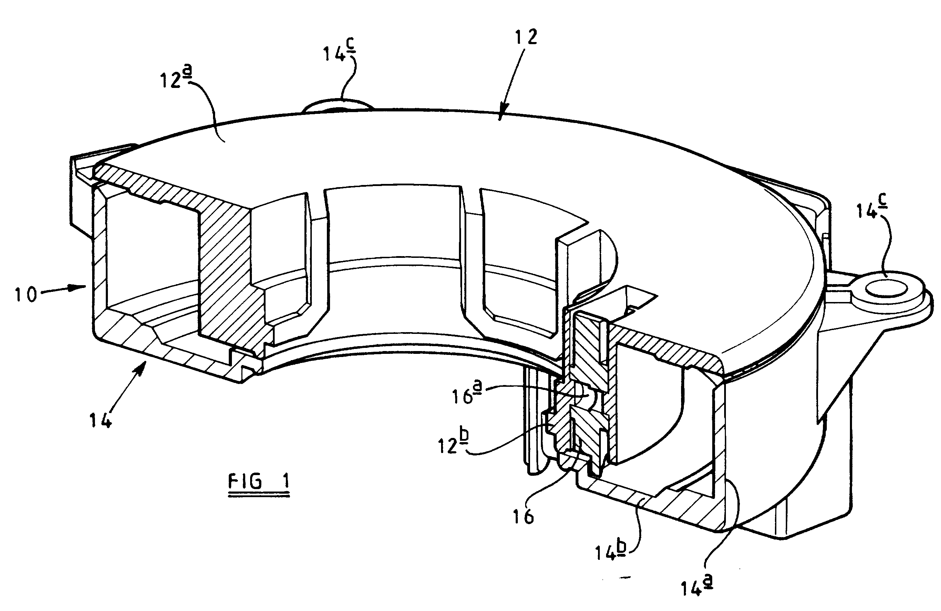

As illustrated in Figure 1, the wall 12b of the upper housing part 12 includes a chamber within which an indicator wheel 16 is mounted for rotation. The indicator wheel includes a centrally located bore 16a which is arranged to cooperate with a pair of oppositely oriented projections which extend from the wall 12b into the chamber, the cooperation between the projections and the bore 16a of the indicator wheel securing the indictor wheel in position so that the indicator wheel is rotatable about the axis of the projections.

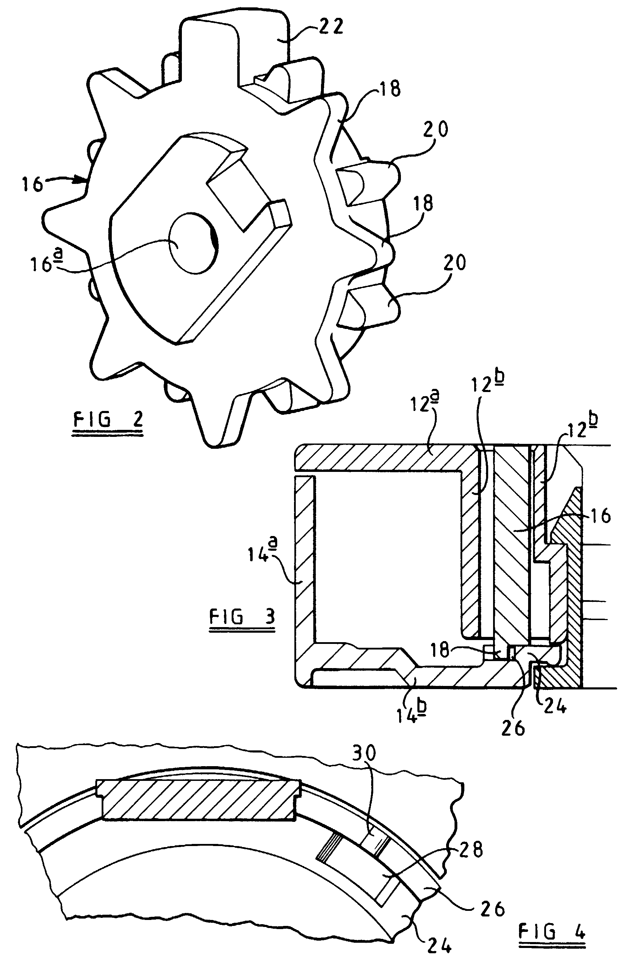

As illustrated most clearly in Figure 2, the outer periphery of the indicator wheel 16 is provided with two sets of teeth. The first set of teeth 18 extend in the axial direction of the indicator wheel from a first surface thereof to a position approximately one third of the way across the thickness of the indicator wheel, the second set of equi-angularly spaced teeth 20 extending from the second face of the indicator wheel to a position approximately two thirds of the way across the thickness of the indicator wheel 16. The teeth 18, 20 are arranged in an alternating fashion. The indicator wheel 16 further includes a projection 22 which extends across the complete thickness of the indicator wheel 16 and is of enlarged angular length compared to the other teeth 18, 20. The projection 22 is located midway between two of the second set of teeth 20.

The teeth 18, 20 and projection 22 are arranged to cooperate with an annular part of the annular region 14b of the lower housing part 14. This part of the annular region 14b is shaped so that for most angular positions of the lower housing part 14 relative to the upper housing part 12, an annular step 24 provided on the upper surface of the annular region 14b cooperates with two adjacent ones of the teeth 20 to restrict or prevent angular movement of the indicator wheel 16 about its axis. An adjacent part 26 of the upper surface of the annular region 14b is spaced downwardly from the step 24 so as to be out of engagement with the teeth 18. As illustrated in Figure 4, the step 24 is provided with a recess 28, and aligned with the recess 28, the region 26 is provided with a tooth 30. The angular extent of the recess 28 is sufficient that when the tooth 30 engages one of the teeth 18 of the indicator wheel 16, an adjacent tooth 20 is able to extend into and pass through the recess 28 to permit angular movement of the indicator wheel 16 as relative rotation of the housing parts 12, 14 occurs. As the tooth 30 moves out of engagement with the tooth 18, the recess 28 also moves so that the step 24 cooperates with two adjacent teeth 20 to prevent further angular movement of the indicator wheel 16.

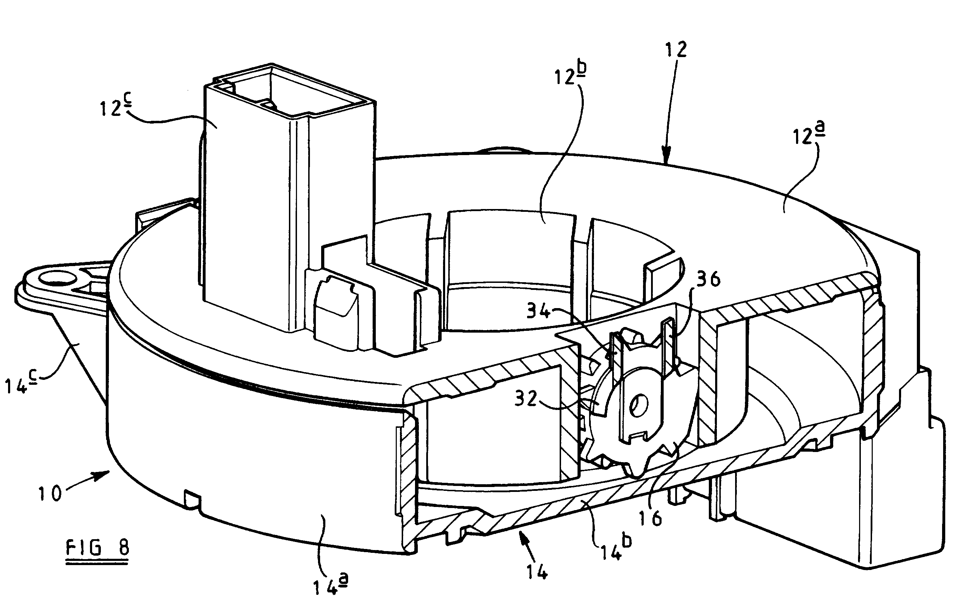

The projection 22 is provided with indicia visible from above the connector when the indicator wheel 16 occupies the position illustrated in Figure 7. In this position of the connector, an equal amount of relative rotation of the housing parts 12, 14 is permitted in either direction. It will be appreciated that as relative rotation occurs, the position of the projection 22 changes thus it is clear that the connector no longer occupies its central position.

Where the vehicle to which the connector is fitted undergoes maintenance work which results in the electrical connector being removed, prior to removal of the electrical connector, the steering wheel should be rotated until the steered wheels occupy their straight ahead position. In this position, the indicator wheel 16 should occupy the position illustrated in Figure 7. The electrical connector can then be removed. Prior to refitting the electrical connector, it should be ensured that the steered wheels occupy their straight ahead position and that the projection 22 occupies the position illustrated in Figure 7. Once these checks have been made, subsequent fitting of the electrical connector to the vehicle will result in the electrical connector occupying the correct relative position such that movement of the steered wheels to either of the extreme lock positions will not cause damage to the electrical connector.

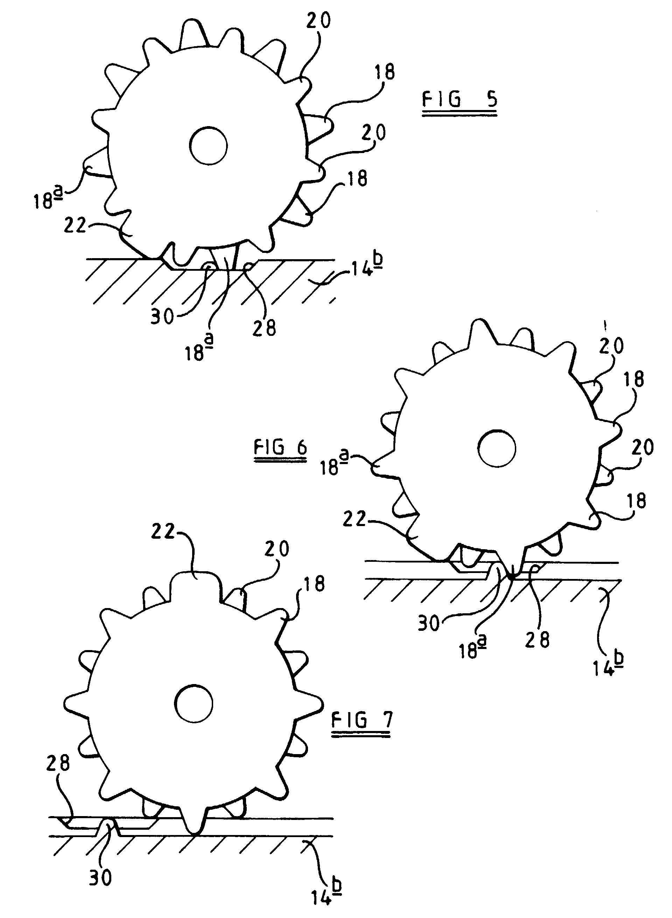

In addition to having an indicator function as described hereinbefore, the projection 22 is also located and has dimensions such that it is not permitted to pass through the recess 28 provided in the step 24. It will therefore be appreciated that after a predetermined amount of relative rotation of the housing parts 12, 14, further relative movement is not permitted as the projection 22 engages the step 24. This position is illustrated in Figures 5 and 6. As further rotation of the indicator wheel 16 is prevented by the engagement of the projection 22 with the step 24, the engagement of the tooth 30 with an associated tooth 18a of the indicator wheel 16 prevents further movement of the housing part 14 relative to the housing part 12 in the particular direction. Clearly, in order for the housing part 14 to move to the right in the orientation illustrated in Figures 5 and 6, the indicator wheel 16 must move in an anti-clockwise direction due to the cooperation between the tooth 30 and the said tooth 18a of the indicator wheel 16. Movement of the indicator wheel 16 in the anti-clockwise direction is not permitted due to the engagement of the projection 22 with the step 24. It will be appreciated, therefore, that additional movement of the housing part 14 towards the right is not permitted. However, movement of the housing part 14 towards the left is permitted as such movement will result in movement of the projection 22 away from the step 24. Clearly, therefore, the housing parts 12, 14 can be moved to return the indicator wheel 16 towards the position shown in Figure 7, and indeed further movement of the indicator wheel 16 may occur until the projection 22 returns into engagement with the step 24. It will be appreciated, therefore, that relative rotation of the housing parts 12, 14 is restricted to a predetermined number of turns, and provided that the windings of the conductor are able to tolerate such an amount of movement, the engagement of the projection 22 with the step 24 occurs prior to damage occurring to the electrical connector.

As the indicator wheel 16 is located within a chamber defined by the wall 12b of the upper housing part 12, it will be appreciated that accidental damage to the indicator wheel is unlikely compared to the arrangement in which the indicator wheel 16 is mounted upon an outer surface of the housing 10. Further, as the indicator wheel 16 is located vertically within the housing 10, and is rotatable about an axis perpendicular to the axis of relative rotation of the housing parts, the electrical connector is suitable for use in applications in which the electrical connector must be of relatively restricted dimensions.

In addition, it will be appreciated that over-rotation of the housing parts prior to fitting the connector to the vehicle is avoided as over-rotation is prevented by engagement of the projection 22 with the step 24. It is also thought that the provision of the indicator wheel adjacent, or within the hub wall of the connector is advantageous in that greater control of the operation of the connector can be achieved, increased tolerance problems being experienced if the wheel is located further from the hub of the connector.

In the description hereinbefore, the indicator wheel 16 comprises an injection moulding. Conveniently, the indicator wheel 16 is moulded using a twin shot moulding technique or other suitable technique arranged such that the teeth 18a the projection 22 are moulded from a hard, wear resistant material, the remainder of the indicator wheel being moulded from a softer material. One advantage of moulding the indicator wheel in this manner is that by moulding the majority of the indicator wheel 16 from a relatively soft material, cyclic noise can be reduced, soft materials being better at absorbing the vibrations causing such noise than harder materials, whilst maintaining sufficient strength in the teeth 18a and projection 22 to permit the connector to operate reliably over a relatively long period, the harder material being of greater wear resistance than a soft material.

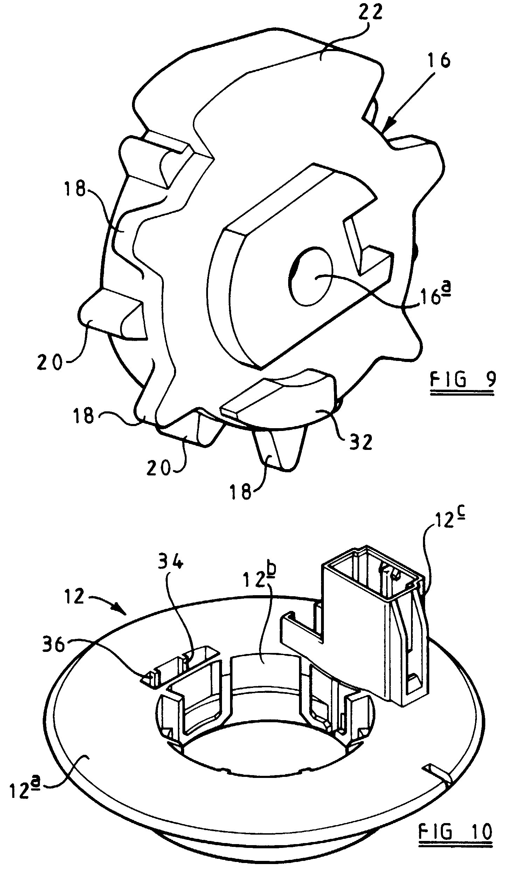

Figures 8, 9 and 10 illustrate an arrangement similar to that described hereinbefore, and like reference numerals used to denote parts similar to those described hereinbefore. In the arrangement shown in Figures 8 to 10, the indicator wheel 16 is provided, on the first surface thereof, with an abutment projection 32 which is located so as to engage with a rib 34 upon rotation of the indicator wheel 16 relative to the upper housing part 12 in one direction by a predetermined angle to prevent further rotation in that direction, and to engage a rib 36 to limit rotation of the indicator wheel 16 beyond a predetermined angle in the opposite direction, the ribs 34, 36 being provided on the upper housing part 12.

In use, during initial relative movement of the upper and lower housing parts 12, 14 away from the central position, the engagement of the teeth 18, 20 with the step and tooth of the lower housing part 14 control rotation of the indicator wheel 16 as described hereinbefore. However, relative movement of the upper and lower housing parts 12, 14 beyond a predetermined position causes the indicator wheel 16 to occupy a position in which the abutment projection 32 engages one of the ribs 34, 36, restricting further movement of the indicator wheel 16. Such a position is shown in Figure 8. Once such a position has been reached, engagement of the tooth 30 of the lower housing part 14 with one of the teeth 18a of the indicator wheel 16 prevents further relative movement of the upper and lower housing parts 12, 14 away from the central position, but relative movement towards the central position is permitted.

The ribs 34, 36 are offset from the centre of the chamber within which the indicator wheel 16 is located in the illustrated embodiment, and the abutment projection 32 has been shaped appropriately to determine the permitted range of angular movement of the indicator wheel 16. A surface of the indicator wheel 16 is provided with a raised region which, during assembly, is intended to slide between the ribs 34, 36. The raised region of the indicator wheel 16 being offset relative from the axis of the wheel 16, thus the bore 16a does not pass through the centre of the raised region. Such location of the ribs 34, 36 and the raised region assists in ensuring that the connector is assembled correctly.

As described hereinbefore, the indicator wheel 16 is conveniently moulded using a twin shot moulding technique or other suitable technique to permit certain ones of the teeth 18 to be of increased strength. As described hereinbefore, it is advantageous for the indicator wheel 16 to be moulded, for the most part, from a relatively soft material, a harder material being present where increased wear resistance is required. In the embodiment of Figures 8 to 10, the regions where increased wear resistance is required are likely to include the teeth 18a and the abutment projection 32. In addition to moulding the teeth 18a from a relatively hard material, the dimensions of the teeth 18a may differ from the remainder of the teeth 18 to increase their strength.

## Claims

1. An electrical connector comprising first and second relatively rotatable housing parts (12, 14) defining a housing, a loosely wound, coiled conductor located within the housing, the conductor having a first end carried by the first housing part (12) and a second end carried by the second housing part (14), and indicator means arranged to indicate the relative positions of the first and second housing parts (12, 14) with respect to a predetermined position, the indicator means comprising an indicator wheel (16) carried by the first housing part (12) and rotatable about an axis extending perpendicularly to the axis of relative rotation of the first and second housing parts (12, 14), the indicator wheel (16) being cooperable with a projection (30) carried by the second housing part (14) to adjust the angular position of the indicator wheel (16) in response to relative rotation of the housing parts (12, 14).

2. A connector as claimed in Claim 1, wherein the indicator wheel (16) is located within the housing, one of the first and second housing parts (12, 14) including an opening through which the indicator wheel (16) is visible.

3. A connector as claimed in Claim 1 or Claim 2, further comprising stop means limiting angular movement of the indicator wheel (16) away from a central position.

4. A connector as claimed in Claim 3, wherein the stop means comprises a projection (22) provided on the indicator wheel (16) which is engageable with an abutment forming part of the second housing part (14).

5. A connector as claimed in Claim 3, wherein the stop means comprises abutment means provided on the indicator wheel (16) and engageable with the first housing part (12) to prevent angular movement of the indicator wheel (16) beyond a predetermined position away from the central position.

6. A connector as claimed in Claim 5, wherein the abutment means comprises a projection (32) engageable with ribs (34, 36) provided on the first housing part (12).

7. A connector as claimed in any one of the preceding claims, wherein the indicator wheel is constructed using a technique permitting the wheel to be constructed from a combination of materials.

8. A connector as claimed in Claim 7, wherein the technique is a twin shot moulding technique.

9. A connector comprising first and second relatively rotatable housing parts (12, 14) and an indicator wheel (16) carried by one of the housing parts (12, 14) and arranged to be driven upon relative movement of the first and second housing parts (12, 14) to provide an indication of the relative positions of the first and second housing parts (12, 14) away from a datum position, wherein the indicator wheel (16) is constructed using a technique permitting the wheel to be constructed from a combination of materials.

10. A connector as claimed in Claim 9, wherein the technique is a twin shot moulding technique.
